# EUROPEAN PATENT APPLICATION

(11) **EP 2 824 251 A2**
(43) Date of publication of application: **14.01.2015**
(21) Application number: 14176769.9
(22) Date of filing: 11.07.2014
(51) Int. Cl.: E04C 2/34

(54) **Pyramidal kagome structure and its fabricating method**

(30) Priority: 11.07.2013 KR 20130081832
(71) Applicant: Korea Advanced Institute Of Science And Technology, Daejeon, Daejeon 305-701 (KR)
(72) Inventor: Yang, Dong Yol, 305-701 Daejeon (KR); Lee, Sung Uk, 305-701 Daejeon (KR); Ham, Sung Seek, 305-701 Daejeon (KR)
(74) Representative: Michalski, Stefan

(57) **Abstract**

The present invention relates to a pyramidal kagome structure and more particularly, to a pyramidal kagome structure having a broaden contact area with a plate member and its fabricating method.

According to the invention, a lattice mesh is formed with a plate so that continuous and mass-production is permitted and the produced pyramidal truss structures are assembled into a pyramidal kagome truss structure by combining the apexes of the pyramidal truss structures, whereby improved mechanical strength is obtained. Furthermore, the connecting of the pyramidal truss structures is facilitated due to the broadened contact area with the top and bottom plate member and an improved stability after combining is obtained.

## Description

### Technical Field

The present invention relates to a pyramidal kagome structure and more particularly, to a pyramidal kagome structure formed from a plate having an increased contact area with a plate and its fabricating method.

### Background Art

Recently, as the need of energy savings are increased, the lightweight materials are being actively developed in various industry fields such as architecture, transportation, etc. Of these, a sandwich panel with periodic truss structure is assessed as being material with good prospects for weight lightening of materials. A truss structure designed to have a high specific strength with the precision calculation has an excellent mechanical properties and advantages that the inner opened space of the truss structure may be used as a fluid or heat transmission passage and a space for accommodating elements such as wire in contrast with a closed cell such as honeycomb structure.

Foam materials have been manufactured by producing bubbles inside a metal of liquid or semi-solid state (closed cell-type), or by casting the material into a mold made of a foaming resin such as sponge (open cell-type). Statistical approach is possible, but it cannot to control the site and size of pore of these foams, individually. Accordingly, it could not to realize the structure designed mechanically.

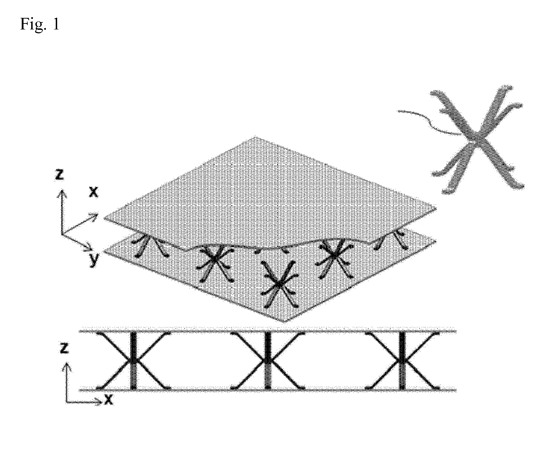

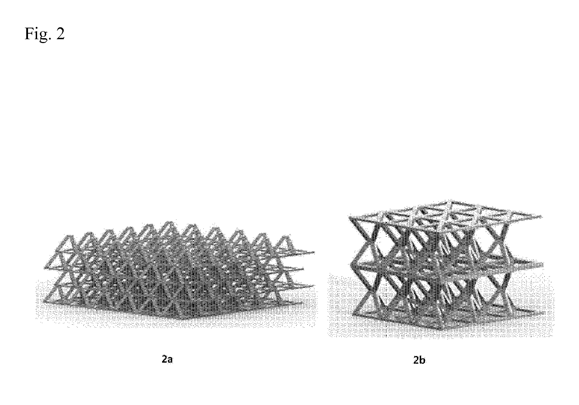

FIG.1 shows a configuration of the pyramidal kagome structure disclosed in Korean Patent No. 10-1207472 and FIG.2 shows a tetrahedral multistory structure disclosed in Korean Patent No. 10-1158088. FIG.2a shows an octet-truss structure in which a multiple units of structure are stacked in the same direction and FIG.2b shows a kagome truss structure, in which a multiple units of structure are stacked in the reverse direction.

The pyramidal kagome structure unit of Korean Patent No. 10-1207472 shown in FIG.1 is one for a large vessel or building, which is manufactured by connecting an inner connecting element between the upper and lower plates by means of welding or any other connecting method. The constructible kagome structure unit has advantages in controlling of the arranging site and the mechanical properties, but has a disadvantage in terms of the long manufacturing time and inefficient mass production.

FIG.2 shows the kagome truss structure and octet-truss structure, in which a multiple tetrahedral units of structure are stacked as disclosed in Korean Patent No. 10-1158088, which is known as one of solid structure. The structure mentioned above has advantages of strength and rigidity as compared with a weight and of manufacturing the structure without loss of materials by forming a metal strip, stacking and connecting it. However, the unit structure is complicated and it is difficult to prepare the forming mold and to fabricate by stacking and welding three strip units.

Meanwhile, the conventional kagome structures suggested in Korean Patent Nos. 10-2006-0130539 and 10-2009-0092152 are fabricated by weaving wires, accordingly have disadvantages in terms of automation of a manufacturing process and production efficiency. Furthermore, it is not easy to connect the wire and connecting panel member because of the small contacting cross section of the wire to be connected. There is further disadvantage of the additional process for insertion of material between the wire and panel member to increase the contact area of the wire.

### Disclosure of the Invention

### Technical Problem

Therefore, the present invention has been made to solve the above-mentioned problems in the prior art, and an object of the present invention is to provide a pyramidal kagome structure having improvements in an increased mechanical strength and an easy combination with an enhanced stability, in which a pyramidal structure formed from a lattice mesh, individually are combined in the manner of an apex-to-apex combination with an increased contact area and the lattice mesh may be continuously mass-produced from a plate.

### Technical Solution

In order to accomplish the above-mentioned object, according to the present invention there is provided a pyramidal kagome structure having a pointed shape (hereinafter, so called as 'a pyramidal shape') of polygonal bottom base plane, comprising a first pyramidal structure which is made by shaping a plate to have multiple pyramidal shapes; and a second pyramid structure which is made by shaping a plate to have multiple pyramidal shapes, which is combined in a manner of an apex-to-apex combination with the first pyramid structure.

The term "pointed shape" is herein referred to as 'a pyramidal shape'.

The plate may be a lattice structure or be one having guide lines slit or cut for forming a pyramidal shape.

The first and second pyramidal structures may have a portion formed in a pyramidal shape by bending and a flat portion which is not bent for a combination with a plate.

The pyramidal kagome structure may comprise a single layer structure that the first and second pyramidal structures are combined (hereinafter, so called as 'combined structure') or may be at least two stacked layer structures.

A plate is combined at the bottoms of the respective first and second pyramid structures.

The polygonal shape of the base plane may include a shape of one selected from a triangle, a tetragon, a pentagon and a hexagon.

The pointed portions of the adjacent pyramidal shapes of the first and second pyramidal structures are protruded from the bottom base plane to the same direction or are protruded from the bottom base planes in an opposite direction with each other.

According to another aspect of the present invention, method of manufacturing a pyramidal kagome structure of a pointed shape(hereinafter, so called as 'a pyramidal shape') having a polygonal bottom base plane is provided, comprising:
(a) a preparing step of shaping a plate to a pyramidal shape;
(b) a step of forming the plate to a first pyramidal structure with a multiple pyramidal shapes;
(c) a step of forming the plate to a second pyramidal structure according to the same method as in the steps (a) and (b); and
(d) a step of combining the apexes of the first and second pyramidal structures in a manner of an apex-to-apex combination.

The preparing step (a) of shaping a plate to a pyramidal shape may comprises forming a multiple lattice mesh to the plate or carving guide lines for the pyramidal shape by slitting or cutting the plate.

The respective first and second pyramidal structures may have a portion formed to a pyramidal shape by bending and a flat portion which is not bent for a combination with a plate.

Subsequent the step (d), the method may further comprise (e) a step of further forming at least one pyramidal combined structure with the first and second pyramidal structures combined (hereinafter, so called as 'combined structure'); and (f) a step of stacking at least two combined structures, each of which includes at least two pyramidal structures.

Subsequent the step (d), the method may further comprise a step of combining a plate to the bottoms of the first and second pyramidal structures, respectively.

The polygonal shape of the base plane may include a shape of one selected from a triangle, a tetragon, a pentagon and a hexagon.

The pointed portions of the adjacent pyramidal shapes of the first and second pyramidal structures are protruded from the bottom base plane to the same direction or are protruded from the bottom base planes in an opposite direction with each other.

According to the present invention, it enables to provide a pyramidal kagome structure having improvements in an increased mechanical strength and an easy combination with an enhanced stability, in which a pyramidal structure formed from a lattice mesh, individually are combined in the manner of an apex-to-apex combination with an increased contact area and the lattice mesh may be continuously mass-produced from a plate.

### Brief Description of the Drawings

FIG. 1 is a perspective view showing a pyramidal kagomes structure according to the prior art;
FIG. 2 is a perspective view showing a tetrahedral stacked structure according to the prior art;
FIG. 3 shows a pyramidal structure module unit manufactured by using a plate according to the present invention;
FIG. 4 shows a process of forming a mesh by roller for manufacturing a pyramidal kagome truss according to one embodiment of the present invention;
FIG. 5 is a perspective view schematically showing a method for manufacturing a pyramidal kagome structure with the mesh;
FIG. 6 is a perspective view schematically showing a method for manufacturing a pyramidal truss module by using the method in FIG. 5 ;
FIG. 7(a) and 7(b) show arrays of the pyramidal kagome structure according to the present invention;
FIG. 8(a) to 8(c) show various inner supporting members formed according to the method of the present invention with an improved mechanical strength for a sandwich panel; and
FIG. 9(a) and 9(b) are perspective views schematically showing a concept of continuously manufacturing pyramidal kagome truss units by forming a plate without a mesh shape, in which guide lines are carved by slitting or cutting.

Hereinafter, an explanation of the present invention will be given with reference to the attached drawings. A detailed explanation on the known functions and configurations related to this invention will be avoided for the brevity of the description. And, the terms as will be mentioned below are used by the functions defined in this invention, which is of course varied in accordance with the intension or rules of a user or operator. Therefore, the definition of the terms should be based upon the contents of the description of the invention.

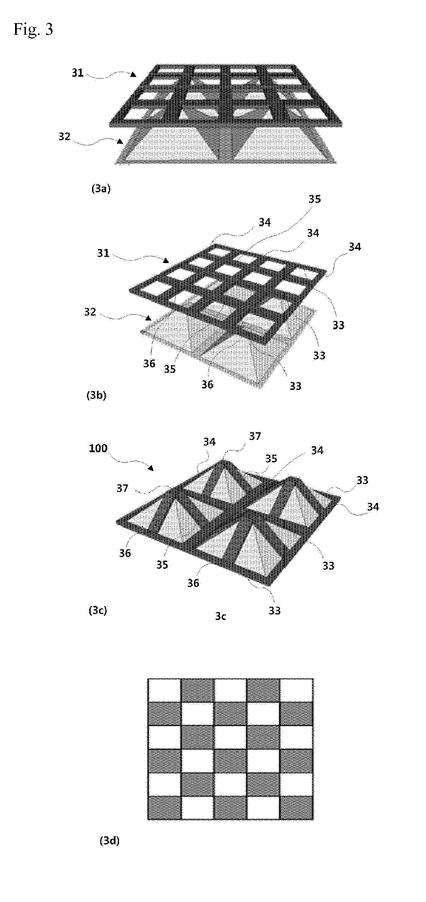

The figures 3 to 9 show pyramidal truss module units embodied according to the invention, which have a pyramidal shape having a tetragonal bottom base plane. However, the tetragonal pyramidal shape is given by way of illustration only and not by way of limitation. Therefore, it should be understood that in the following description referring to Fig. 3 to 9, the pyramidal shape may include a polygonal pyramidal shape of a bottom base plane such as a triangle, a tetragon, a pentagon or a hexagon. That is, a kagome truss structure of the present invention means a truss structure having a bottom base plane of a polygonal shape including a triangle, a rectangle, a pentagon or a hexagon.

FIG.3 illustrates a pyramidal truss module unit manufactured by using a plate according to the present invention.

Fig.3a and 3b show a lattice polymer mesh 31 prior to forming and a mold 32 for forming the lattice polymer mesh 31 to have a shape of pyramid. Fig.3c illustrates a kagome truss structure 11 formed in the shape of pyramid along the side of the mold. The lattice mesh 31 may be formed by a blanking or an extruding process.

The pyramidal kagome truss is manufactured by pressing or rolling the lattice portions of the lattice mesh 31 of ductile or thermoplastic materials so to be bent in the shape of pyramid. In the process of pyramidal kagome truss structure, the lattice portions are formed alternatively. In other words, the first, third and fifth odd number lattice lines 33 in the horizontal direction and the first, third and fifth odd number lines 34 in the vertical direction are not bent and remain flat mesh structure to form a bottom of the pyramidal truss 100. The second, fourth and sixth even number lattice lines 35 in the horizontal direction and the second, fourth and sixth even number lattice lines 36 in the vertical direction are bent to form supporting members of the pyramidal truss structure. Accordingly, a flat bottom of the mesh structure may have a broaden area so that a sandwich panel having enhanced shearing stress may be provided due to the broaden contact area with a panel to be provided outside.

The odd number lattice lines 33, 34 which is not bent remains on the bottom plane of the lattice mesh 31, and contact (not shown) a plate when a sandwich panel is fabricated. Accordingly, more broaden contact area with the plate is provided compared to the apex portions of the conventional pyramid truss, so that the pyramid truss and the plate may be easily combined and an enhanced stability is provided.

More improved strength may be achieved by using light metal, engineering plastic or fiber-reinforced composite material as a pyramid truss material. An homogeneous plate of Metal, timbers such as a plywood or fiber-reinforced composite material, or a hollow panel, or a sandwich panel with a lattice middle layer may be used as a plate.

As shown in Figs 3a, 3b and 3c, pointed portions of the multiple pyramidal truss structure may be protruded from a bottom base plane to a same direction, respectively.

However, as shown in Fig. 3d, the pointed portions of the adjacent pyramidal shapes may be protruded from the bottom base plane in opposite directions. That is, the blue colored pointed portions are upwardly protruded, while the white colored pointed portions are downwardly protruded. Of course, the shape of the bottom base plane is not limited in a tetragon, may be one selected from a triangle, a tetragon, a pentagon and a hexagon.

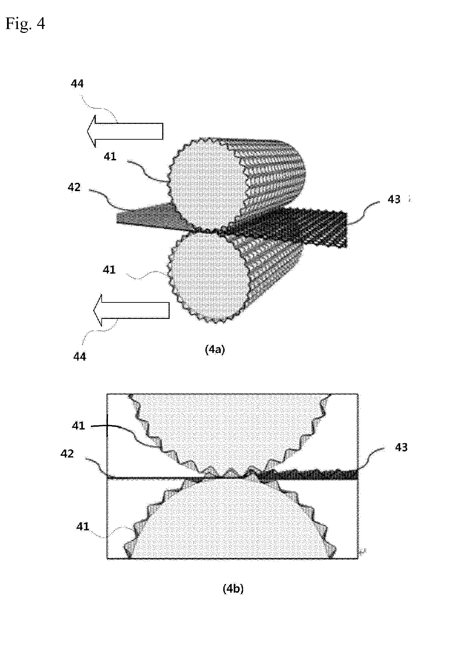

FIG. 4 illustrates a process forming a mesh by using rollers as an embodiment of the method of manufacturing the pyramidal kagome structure 100 in FIG. 3. That is, the roller 41 as a mold like as the mold 32 in FIG. 3 is driven in the direction of an arrow 44 to press the lattice mesh 42, whereby the pyramidal kagome structure 43 such as the kagome structure 100 is obtained.

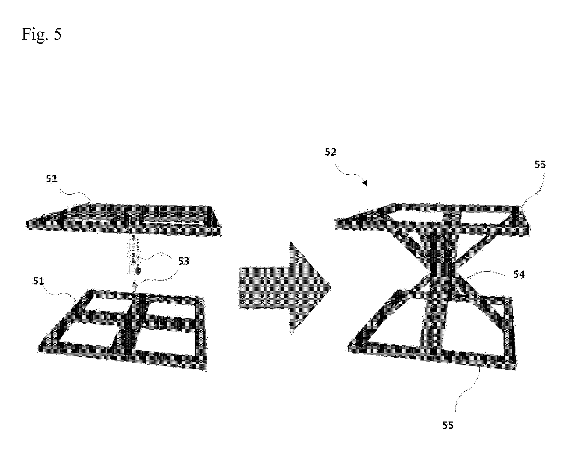

FIG. 5 illustrates a process for manufacturing the pyramidal kagome truss structure 52. A pair of the lattice meshes 51 are assembled into the pyramidal kagome truss structure 52 by welding apexes thereof so that the pyramidal kagome truss structure 52 may be assembled symmetrically and broaden contact area 55 with (not shown) a plate provided at the top and bottom thereof may be obtained.

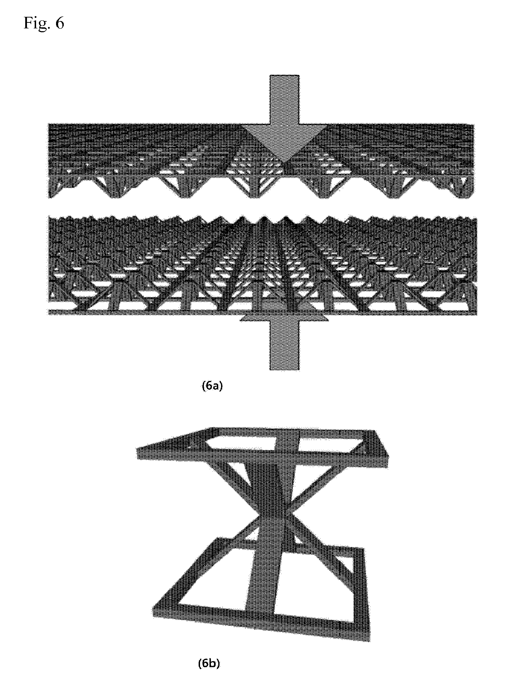

FIG. 6 illustrates a method for manufacturing a pyramidal truss module by using the method explained referring FIG. 5.

FIG. 6a illustrates a pyramidal kagome truss structure manufactured by combining two pyramidal truss arrays in the direction of arrow, and FIG. 6b shows a shape of the pyramidal kagome truss structure as an unit made as mentioned above.

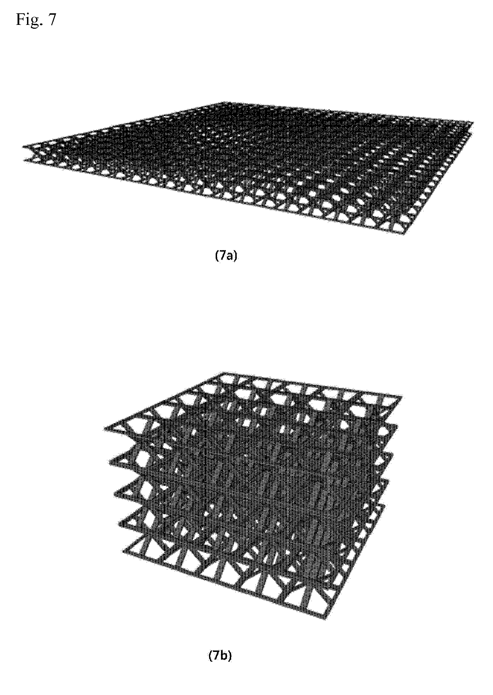

FIG. 7 shows a pyramidal kagome array structure according to the present invention.

FIG. 7a shows a pyramidal kagome array and FIG. 7b shows a structure that several pyramidal kagome arrays are stacked. That is, at least two combined structures, each of which includes at least two pyramidal structures may be stacked.

The pyramidal kagome array structure has an open structure, so that a vacant space between the middle trusses may be used for a fluid passage, storage, heat transfer, and electrical wiring. For example, the vacant space may be filled with synthetic resins materials or concrete materials so as to improve the strength for preventing from the buckling of the truss structure and may be filled with materials for insulation to improve the insulation performance of sound and heat.

Furthermore, it is difficult to form a single layered pyramidal structure to have high aspect ratio due to the limited formability, but a truss structure may be assembled with multiple of pyramidal kagome arrays which can be easily stacked so as to have improved bending strength.

Generally, the sandwich plate is a structure having high second moment of inertia, of which top and bottom plates support almost of the bending moment and the middle portion of a three dimensional truss supports shear force, thereby having higher specific strength and rigidity and thus being more lightweight structure than conventional truss structure. The more the distance between the top and bottom plates is long, the higher second moment of inertia the truss structure has. Accordingly, it is advantageous for improvement of strength and weight lightening to increase the height of the middle portion.

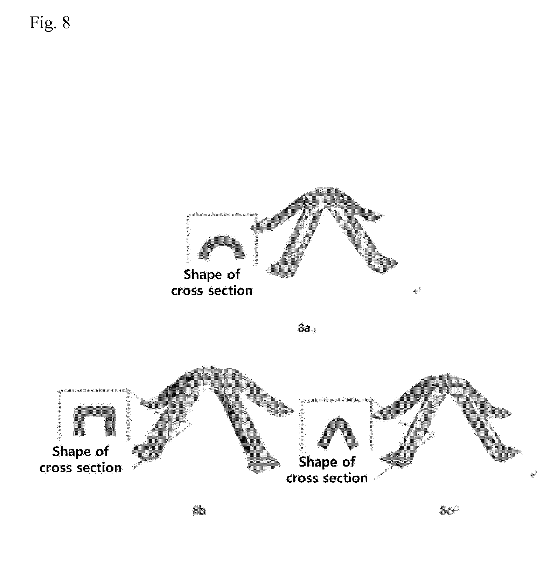

FIG. 8 shows various shape of the unit structure of the inner supporting member with improved mechanical strength used in the sandwich panel according to the present invention.

FIGS. 8a, 8b and 8c show the cross sections in the arrow direction, respectively.

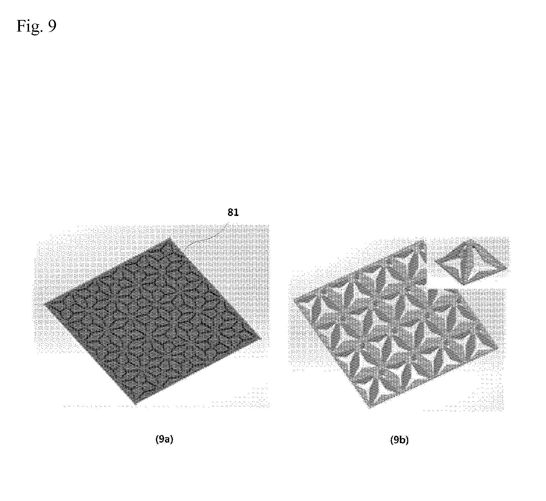

FIG. 9 illustrates the process manufacturing continuously a unit structure of the plate which is not in a mesh shape, by roll-forming the plate in which slitting or cutting lines 81 as a forming guide line are carved.

FIG.9a shows a shape of the plate prior to roll-forming, and FIG 9b shows the unit structure of the plate after roll-forming. For example, the roller shown in FIG. 4 may be used as the roll-forming method of the plate. Similarly, the unit structure may be assembled by combining the apexes as in FIGS. 5 and 6, or by stacking the units as in FIG.7b.

Although the unit structure in FIG. 9b is formed from a plate which is not a lattice mesh, the unit structure after forming has a pyramidal structure.

The forgoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

In the description herein, numerous specific details are provided, such as examples of components and/or methods, to provide a thorough understanding of embodiments of the invention. One skilled in the relevant art will recognize, however, that an embodiment may be able to be practiced without one or more of the specific details, or with other apparatus, systems, assemblies, methods, components, materials, parts, and/or the like. In other instances, well-known structures, components, systems, materials, or operations are not specifically shown or described in detail to avoid obscuring aspects of embodiments of the invention. While the invention may be illustrated by using a particular embodiment, this is not and does not limit the invention to any particular embodiment and a person of ordinary skill in the art will recognize that additional embodiments are readily understandable and are a part of this invention.

It will also be appreciated that one or more of the elements depicted in the drawings/figures can also be implemented in a more separated or integrated manner, or even removed or rendered as inoperable in certain cases, as is useful in accordance with a particular application. Additionally, any signal arrows in the drawings/figures should be considered only as exemplary, and not limiting, unless otherwise specifically noted.

## Claims

1. A pyramidal kogome structure having a pointed shape of polygonal bottom base plane, comprising a first pyramidal structure which is made by shaping a plate to have multiple pyramidal shapes; and
a second pyramidal structure which is made by shaping a plate to have multiple pyramidal shapes, which is combined in a manner of an apex-to-apex combination with the first pyramidal structure.

2. The pyramidal kogome structure as claimed in claim 1, wherein said plate may be a lattice structure or be one having guide lines slit or cut for forming a pyramidal shape.

3. The pyramidal kogome structure as claimed in claim 1 or 2, wherein said first and second pyramidal structures may have a portion formed in a pyramidal shape by bending and a flat portion which is not bent for combination with a plate.

4. The pyramidal kogome structure as claimed in claims 1 to 3, wherein said pyramidal kagome structure comprise a single layer structure that the first and second pyramidal structures are combined or may be at least two stacked layer structures.

5. The pyramidal kogome structure as claimed in claims 1 to 4, wherein a plate is combined at the bottoms of the respective first and second pyramidal structures.

6. The pyramidal kogome structure as claimed in claims 1 to 5, wherein the polygonal bottom base plane has a shape of one selected from a triangle, a tetragon, a pentagon and a hexagon.

7. The pyramidal kogome structure as claimed in claims 1 to 6, wherein the pointed portions of the adjacent pyramidal shapes of the first and second pyramidal structures are protruded from the bottom base plane to the same direction or are protruded from the bottom base planes in an opposite direction with each other.

8. A method of manufacturing a pyramidal kagome structure of a pointed shape having a polygonal bottom base plane is provided, comprising:
(a) a preparing step of shaping a plate to a pyramidal shape;
(b) a step of forming the plate to a first pyramidal structure with a multiple pyramidal shapes;
(c) a step of forming the plate to a second pyramidal structure according to the same method as in the steps (a) and (b); and
(d) a step of combining the apexes of the first and second pyramidal structures in a manner of an apex-to-apex combination.

9. The method as claimed in claim 8, wherein said preparing step (a) of shaping a plate to a pyramidal shape comprises forming a multiple lattice mesh to the plate or carving guide lines for the pyramidal shape.

10. The method as claimed in claim 8 or 9, wherein said respective first and second pyramidal structures has a portion formed to a pyramidal shape by bending and a flat portion which is not bent for combining with a plate.

11. The method as claimed in claims 8 to 10, further comprising, subsequent the step (d), (e) a step of forming at least one pyramidal combined structure with the first and second pyramidal structures; and (f) a step of stacking at least two combined structures, each of which includes at least two pyramidal structures.

12. The method as claimed in claims 8 to 11, further comprising, subsequent the step (d), a step of combining a plate at the bottoms of the first and second pyramidal structures, respectively.

13. The method as claimed in claims 8 to 12, said polygonal shape of the bottom base plane of the pyramidal structure is one selected from a triangle, a tetragon, a pentagon and a hexagon.

14. The method as claimed in claims 8 to 13, wherein the pointed portions of the adjacent pyramidal shapes of the first and second pyramidal structures are protruded from the bottom base plane to the same direction or are protruded from the bottom base planes in an opposite direction with each other.
